(19) **Europäisches Patentamt**

**European Patent Office**

**Office européen des brevets**

(11) **EP 0 962 642 B1**

(12) **EUROPÄISCHE PATENTSCHRIFT**

(45) Veröffentlichungstag und Bekanntmachung des Hinweises auf die Patenterteilung:
**30.06.2004   Patentblatt 2004/27**

(51) Int Cl.⁷: **F02D 41/18**, F02D 41/26, G01F 1/696

(21) Anmeldenummer: **99108410.4**

(22) Anmeldetag: **29.04.1999**

(54) **Verfahren zur Korrektur der durch ein Saugrohr angesaugten und im Saugrohr gemessenen Luftmasse eines Verbrennungsmotors**

Procedure for the correction of the sucked air mass measurement in the intake tube of a combustion engine

Procédé de correction de la mesure de la masse d'air aspirée dans le tube d'admission d'un moteur à combustion

(84) Benannte Vertragsstaaten:
**DE ES FR GB IT**

(30) Priorität: **05.06.1998  DE 19825305**

(43) Veröffentlichungstag der Anmeldung:
**08.12.1999   Patentblatt 1999/49**

(73) Patentinhaber: **Bayerische Motoren Werke Aktiengesellschaft**
**80788 München (DE)**

(72) Erfinder: **Rekewitz, Gert**
**82515 Wolfratshausen (DE)**

(56) Entgegenhaltungen:
DE-A- 4 433 044          DE-A- 19 538 451
US-A- 4 468 963          US-A- 4 510 795
US-A- 4 664 085          US-A- 4 774 833
US-A- 5 668 313

## Beschreibung

Die Erfindung betrifft ein Verfahren zur Korrektur der durch ein Saugrohr angesaugten und im Saugrohr gemessenen Luftmasse eines Verbrennungsmotors.

Ein derartiges Verfahren ist beispielsweise aus der DE 33 44 276 C2 bekannt. Bei diesem bekannten Verfahren wird die Menge der Saugluft des Verbrennungsmotors mittels eines thermischen Durchflußmeßgerätes gemessen und ein Differential der Saugluftmenge auf der Basis einer sich ändernden Eigenschaft der Saugluftmenge ermittelt, wobei das Differential ein Maß für die Größe der Schwingungen der Saugluft darstellt. Eine Korrektur wird auf der Basis dieses Differentials durchgeführt. Eine Korrektur mittels des Differentials reagiert jedoch bereits bei nur kurzzeitigen Pulsationen bzw. Schwingungsänderungen der Amplitude unerwünscht empfindlich.

Weiterhin sind Verfahren eingangs genannter Art auch aus der DE 195 38 451 A1 und der DE 44 33 044 A1 bekannt. Bei diesen bekannten Verfahren werden insbesondere die durch Pulsationen auftretenden Messfehler berücksichtigt.

Zur Begründung der Notwendigkeit eines Verfahrens zur Korrektur der durch ein Saugrohr angesaugten und im Saugrohr gemessenen Luftmasse eines Verbrennungsmotors wird im folgenden auf das technische Umfeld eingegangen.

In Motorsteuergeräten für Verbrennungsmotoren wird die angesaugte Luftmasse mittels eines speziellen Sensors, z. B. eines Heißfilm-Luftmassenmessers, erfaßt. Dazu wird die Ausgangsspannung des Sensors zeitsynchron abgetastet und mittels Kennlinieninterpolation in eine entsprechende Luftmasse umgerechnet. Daraufhin werden die berechneten Werte aufaddiert. Anschließend wird kurbelwellensynchron (z. B. bei Vierzylinder-Verbrennungsmotoren alle 180° Kurbelwelle) der arithmetische Mittelwert gebildet. Dieser Mittelwert wird auch als Lastsignal bezeichnet und dient insbesondere zur Bestimmung des Zündzeitpunktes und zur Berechnung der Einspritzzeit z. B. für eine stöchiometrische Verbrennung.

Je nach Motortyp und Saugrohrgeometrie kommt es bei bestimmten Betriebspunkten zu Schwingungen der Luftsäule im Saugrohr (Pulsationen), die zu Fehlmessungen des im Saugrohr befindlichen Sensors führen (unerwünschte Messung der Rückströmung). Kleine Schwingungen können durch die Mittelwertbildung noch eliminiert werden; d. h. die Mittelwertbildung liefert noch ein richtiges Ergebnis. Die Rückströmungen können jedoch so groß werden, daß der gemessene Mittelwert nicht mehr dem wahren Mittelwert entspricht. Daraus resultiert eine falsch berechnete Einspritzzeit und damit eine nicht ideale Verbrennung mit der Folge eines verschlechterten Abgasverhaltens. Der bei Katalysatorfahrzeugen implementierte Lambda-Regler mit der im Abgasstrang befindlichen Lambda-Sonde kann diese Fehlanpassung nur zum Teil kompensieren, da die Fehlmessungen seinen Regelbereich überschreiten können.

Es ist Aufgabe der Erfindung, diese Pulsationen zu erkennen und den gemessenen Mittelwert zu korrigieren. Weiterhin soll die Korrektur durch ein störunempfindliches Verfahren vorgenommen werden.

Diese Aufgabe wird durch die kennzeichnenden Merkmale des Patentanspruchs 1 gelöst.

Vorteilhafte Weiterbildungen sind die Gegenstände der abhängigen Ansprüche.

Erfindungsgemäß wird die gemessene Luftmasse, insbesondere in Form des gemessenen Mittelwertes, mit einem Korrekturfaktor multipliziert, der in Abhängigkeit von einer das Meßfehlerausmaß wiedergebenden Größe und in Abhängigkeit von einer die Meßfehlerrichtung wiedergebenden Größe gebildet wird.

Vorzugsweise wird die das Meßfehlerausmaß wiedergebende Größe mittels eines statistischen Berechnungsverfahrens ermittelt. Hierzu eignet sich besonders die Berechnung der bekannten Standardabweichung $\sigma$ oder der Varianz $\sigma^2$. Die das Meßfehlerausmaß wiedergebende Größe entspricht dem Pulsationsmaß der schwingenden Luftmasse im Saugrohr. Zur Berechnung der Standardabweichung müssen die Summe der Eingangsspannungen und die Summe des Quadrats der Eingangsspannungen des Sensors (z. B. Heißfilm-Luftmassenmesser) berechnet werden. Die Standardabweichung wird entsprechend der Mittelwertbildung bei der Luftmassenberechnung segmentsynchron ermittelt. Die das Meßfehlerausmaß wiedergebende Größe (z. B. Standardabweichung oder Varianz) kann direkt zur Korrektur der gemessenen Luftmasse benutzt werden, indem man den gemessenen und vorzugsweise gemittelten Wert der Luftmasse mit einem Korrekturfaktor multipliziert, der vorzugsweise aus einer Kennlinie, einem Kennfeld oder auch einem Kennraum gewonnen wird. Durch die das Meßfehlerausmaß wiedergebende Größe liegt zunächst lediglich die Information vor, um welchen Betrag die gemessene Luftmasse korrigiert wird, jedoch fehlt noch die Information, ob die Korrektur in Form einer Erhöhung oder Reduzierung der gemessenen Luftmasse vorzunehmen ist. Diese zweite Information wird durch die die Meßfehlerrichtung wiedergebende Größe geliefert. Die die Meßfehlerrichtung wiedergebende Größe wird durch mindestens eine Betriebsgröße des Verbrennungsmotors, wie z. B. die Motordrehzahl und/ oder die Drosselklappenstellung und/oder den Ventilhub bei Verbrennungsmotoren mit Hubverstellung der Einlaßventile, ermittelt. Hierfür werden insbesondere Betriebsgrößen verwendet, durch die aus dem daraus resultierenden Betriebszustand des Verbrennungsmotors eine zu erwartende Luftmasse im Saugrohr abschätzbar ist. Beispielsweise wird in Form einer Plausibilitätsüberwachung die abgeschätzte zu erwartende Luftmasse mit der gemessenen Luftmasse verglichen. Ist die gemessene Luftmasse größer als die geschätzte zu erwartende Luftmasse aufgrund der vorliegenden Betriebsgröße, liefert die die Meßfehlerrichtung wiedergebende Größe die Information, daß die gemessene Luftmasse bei der Korrektur zu reduzieren ist. Ist jedoch die gemessene Luftmasse kleiner als die aufgrund der gerade vorliegenden Betriebsgröße zu erwartenden Luftmasse, liefert die die Meßfehlerrichtung wiedergebende Größe die Information, daß die gemessene Luftmasse bei der Korrektur zu erhöhen ist. Dabei kann die Betriebsgröße selbst die die Fehlerrichtung wiedergebende Größe sein.

Vorzugsweise wird der Korrekturfaktor mittels eines Kennfeldes ermittelt, dessen erste Eingangsgröße die das Meßfehlerausmaß wiedergebende Größe und dessen zweite Eingangsgröße die die Meßfehlerrichtung wiedergebende Größe ist.

Durch dieses erfindungsgemäße Verfahren ist eine sehr genaue und störunempfindliche Korrektur der gemessenen Luftmasse im Saugrohr möglich.

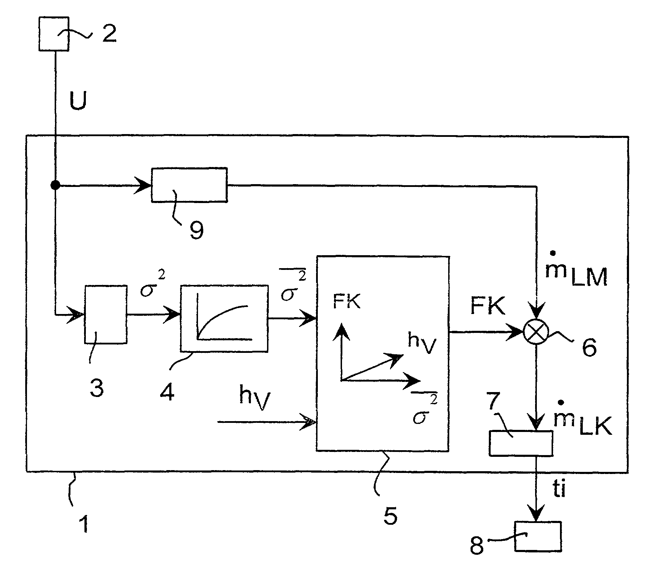

In der Zeichnung ist ein Ausführungsbeispiel der Erfindung dargestellt. Sie zeigt eine mögliche Realisierung des erfindungsgemäßen Verfahrens als Teil eines Motorsteuergeräts.

In der einzigen Figur sind die für das erfindungsgemäße Verfahren erforderlichen Komponenten in einem ohnehin bereits für verschiedene Funktionen des Verbrennungsmotors vorgesehenen Brennkraftmaschinen-Steuergerät 1 dargestellt. Die für andere Funktionen erforderlichen Komponenten des Motorsteuergeräts 1 sind hier nicht dargestellt.

Das Spannungssignal U eines Heißfilm-Luftmassenmessers 2, der in einem hier nicht dargestellten Saugrohr angeordnet ist, ist Eingangssignal des Brennkraftmaschinen-Steuergeräts 1. Das Spannungssignal U wird zum einen an den Statistikblock 3 und zum anderen an den Signalumrechnungsblock 9 herangeführt. Im Statistikblock 3 wird die Varianz $\sigma^2$ nach folgender Formel berechnet:

$$\sigma^2 = (\sum_{i=1}^{N} U_i^2 - N \times \overline{U}^2) / (N-1) \tag{1}$$

wobei $U_i$ die abgetasteten Meßwerte, $U_i^2$ die quadrierten Meßwerte, $\overline{U}$ der berechnete Mittelwert und $N$ die Anzahl der abgetasteten Meßwerte des Spannungssignals U sind.

Es könnte im Statistikblock 3 auch die Standardabweichung $\sigma$ berechnet werden, hierfür müßten jedoch eine programmtechnisch aufwendige Berechnung der Wurzel vorgenommen werden. Um die Berechnung der Varianz $\sigma^2$ programmtechnisch weiterhin zu vereinfachen, wird die Formel (1) in folgende Formel umgeformt:

$$\sigma^2 = (N \times \sum_{i=1}^{N} U_i^2 - (\sum_{i=1}^{N} U_i \times \sum_{i=1}^{N} U_i)) / ((N-1) \times N) \tag{2}$$

Die so berechnete Varianz $\sigma^2$ wird vorzugsweise über einen Tiefpaßfilter 4 geführt. Daraus ergibt sich eine gemittelte Varianz $\overline{\sigma^2}$ als die das Meßfehlerausmaß wiedergebende Größe. Diese das Meßfehlerausmaß wiedergebende Größe $\overline{\sigma^2}$ ist erstes Eingangssignal eines Kennfeldes 5. Weiterhin erhält das Kennfeld 5 als zweites Eingangssignal die Betriebsgröße $h_v$ des Verbrennungsmotors, die im vorliegenden Ausführungsbeispiel dem Sollhub bei einem Verbrennungsmotor mit Hubverstellung der Einlaßventile entspricht. Die Betriebsgröße $h_v$ in Form des Sollhubs entspricht der die Meßfehlerrichtung wiedergebenden Größe.

In Abhängigkeit von der das Meßfehlerausmaß wiedergebenden Größe $\overline{\sigma^2}$ und von der die Meßfehlerrichtung wiedergebenden Größe $h_V$ wird im Kennfeld 5 ein Korrekturfaktor FK ermittelt. Das Kennfeld 5 kann beispielsweise empirisch ermittelt und im Motorsteuergerät 1 abgespeichert werden. Die Ermittlung des Korrekturfaktors FK kann jedoch auch in Abhängigkeit von der das Meßfehlerausmaß wiedergebenden Größe und von der die Meßfehlerrichtung wiedergebenden Größe durch ein Schätzungsmodell oder einen Algorithmus ermittelt werden. Der im Kennfeld 5 ermittelte Korrekturfaktor FK wird an eine Multiplizierstelle 6 geführt. Ein weiteres Eingangssignal der Multiplizierstellte 6 ist die gemessene Luftmasse nach der arithmetischen Mittelwertbildung und Umrechnung des Spannungssignals U im Signalumrechnungsblock 9. Die gemessene Luftmasse $\dot{m}_{LM}$ wird in der Multiplizierstelle 6 mit dem Korrekturfaktor FK multipliziert, wodurch sich die korrigierte Luftmasse $\dot{m}_{LK}$ ergibt. Erfindungsgemäß könnte als zu korrigierende Größe alternativ auch das Spannungssignal U selbst verwendet werden, wodurch sich als korrigierte Meßgröße ebenfalls ein Spannungssignal ergeben würde, das anschließend entsprechend weiterverarbeitet werden könnte.

Im Kraftstoffzumessungsblock 7 wird anschließend in Abhängigkeit von der korrigierten Luftmasse $\dot{m}_{LK}$ die für ein gewünschtes Verbrennungsverhalten erforderliche Einspritzzeit ti ermittelt. Die Einspritzventile 8 werden vom Brennkraftmaschinen-Steuergerät 1 für diese so ermittelte Einspritzzeit ti angesteuert.

Durch dieses erfindungsgemäße Ausführungsbeispiel ist eine optimale Verbrennung und damit eine Abgasminimierung möglich.

Ergänzend wird darauf hingewiesen, daß als Betriebsgröße oder Betriebsgrößen zur Ermittlung der die Meßfehlerrichtung wiedergebenden Größe Betriebsgrößen verwendet werden, die insbesondere das Ausmaß der Drosselung der angesaugten Luft im Saugrohr wiedergeben. Durch das erfindungsgemäße Verfahren können Meßfehler, die insbesondere bei einer geringen Drosselung durch Turbulenzen auftreten, wirksam verhindert werden.

**Patentansprüche**

1.  Verfahren zur Korrektur der durch ein Saugrohr angesaugten und im Saugrohr gemessenen Luftmasse eines Verbrennungsmotors, wobei die gemessene Luftmasse (U oder $\dot{m}_{LM}$) mit einem Korrekturfaktor (FK) multipliziert wird, der in Abhängigkeit von einer das Meßfehlerausmaß wiedergebenden Größe ($\sigma^2$) und in Abhängigkeit von einer die Meßfehlerrichtung wiedergebenden Größe ($h_V$) gebildet wird, **dadurch gekennzeichnet, daß** die das Meßfehlerausmaß wiedergebende Größe ($\sigma^2$) mittels Berechnung der Standardabweichung ($\sigma$) oder der Varianz ($\sigma^2$) der gemessenen Luftmasse (U oder $\dot{m}_{LM}$) ermittelt wird.

2.  Verfahren nach Patentanspruch 1, **dadurch gekennzeichnet, daß** die die Meßfehlerrichtung wiedergebende Größe durch mindestens eine weitere Betriebsgröße ($h_V$) des Verbrennungsmotors ermittelt wird.

**Claims**

1.  A method for correcting the airflow in an internal-combustion engine drawn in through an induction pipe and measured in the induction pipe, the measured airflow (U or $\dot{m}_{LM}$) being multiplied by a correction factor (FK) which is formed as a function of a variable ($\sigma^2$) expressing the degree of measurement error and as a function of a variable ($h_v$) expressing the direction of measurement error, **characterised in that** the variable ($\sigma^2$) expressing the degree of measurement error is determined by calculating the standard deviation ($\sigma$) or the variance ($\sigma^2$) of the measured airflow (U or $\dot{m}_{LM}$).

2.  A method according to claim 1, **characterised in that** the variable expressing the direction of measurement error is determined by at least one further operating variable ($h_v$) of the internal-combustion engine.

**Revendications**

1.  Procédé de correction de la masse d'air aspirée par un collecteur d'admission et mesurée dans le collecteur d'admission d'un moteur à combustion interne, la masse d'air mesurée (U ou $m_{LM}$) étant multipliée par un facteur de correction (FK) déterminé en fonction d'une grandeur ($\bar{\sigma}$) représentant l'importance de l'erreur de mesure et en fonction d'une grandeur ($h_V$) représentant le sens de l'erreur de mesure,
    **caractérisé en ce que**
    la grandeur ($\bar{\sigma}$) représentant l'importance de l'erreur de mesure est déterminée au moyen d'un calcul de l'écart standard ($\sigma$) ou de la variance ($\sigma^2$) de la masse d'air mesurée (U ou $m_{LM}$).

2.  Procédé selon la revendication 1,
    **caractérisé en ce que**
    la grandeur représentant le sens de l'erreur de mesure est déterminée par au moins une autre grandeur de fonctionnement ($h_V$) du moteur à combustion interne.